Europäisches Patentamt

European Patent Office

Office européen des brevets

(19)

(11) Veröffentlichungsnummer: **0 136 431**
**B1**

(12) **EUROPÄISCHE PATENTSCHRIFT**

(45) Veröffentlichungstag der Patentschrift:
14.06.89

(51) Int. Cl.⁴: **F 16 B 12/32**

(21) Anmeldenummer: 84108448.6

(22) Anmeldetag: 18.07.84

(54) Konstruktion aus Profilstäben.

(30) Priorität: 04.08.83 DE 3328142

(43) Veröffentlichungstag der Anmeldung:
10.04.85 Patentblatt 85/15

(45) Bekanntmachung des Hinweises auf die Patenterteilung:
14.06.89 Patentblatt 89/24

(84) Benannte Vertragsstaaten:
AT BE CH DE FR GB IT LI LU NL SE

(56) Entgegenhaltungen:
EP-A- 0 010 475
US-A- 3 061 055
US-A- 3 901 612
US-A- 4 021 129

(73) Patentinhaber: Item Industrietechnik und Maschinenbau Gmbh, Friedenstrasse 107-109, D-5650 Solingen 11 (DE)

(72) Erfinder: Rixen, Edgar, Taunusstrasse 14,
D-5650 Solingen 11 (DE)

(74) Vertreter: Sturies, Herbert et al, Patentanwälte Dr. Ing. Dipl. Phys. Herbert Sturies Dipl. Ing. Peter Eichler Postfach 20 12 42, D-5600 Wuppertal 2 (DE)

## Beschreibung

Die Erfindung bezieht sich auf eine Konstruktion aus Profilstäben, insbesondere Leichtmetallstäben, die mit einem längs durchbohrten Zentralstab versehen sind und in ihren Außenflächen hinterschnittene Längsnuten aufweisen, von denen zwei einander paarweise zu dem Zentralstab gegenüberliegen, wobei zwei Profilstäbe winkelig zusammengesetzt und von einer Verbindungsschraube zusammengehalten sind, die mit dem ein Anziehen dieser Schraube ermöglichenden Schraubenkopf in der Hinterschneidung einer Längsnut eines diesen beaufschlagenden Profilstabs angeordnet und mit dem Schraubengewinde von der Stirnseite des zweiten Profilstabs in dessen mit Innengewinde versehenen Zentralstab eingeschraubt ist.

Maschinengestelle, Arbeitstische u. dgl. werden zunehmend aus Profilstäben aufgebaut, die durch Schraubverbindungen zusammengehalten werden. Durch die Schraubverbindungen werden teure Bearbeitungsvorgänge vermieden, wie z. B. ein Verschweißen, und die verwendeten Stäbe sind wiederverwendungsfähig.

Aus der EP-A-10 475 ist eine Konstruktion mit den eingangs genannten Merkmalen bekannt. Der Schraubenkopf der bekannten Verbindungsschraube stützt sich jedoch auf dem Zentralstab des ersten Profilstabs ab, durchdringt den Zentralstab sowie eine zwischen letzterem und der Stirnseite des zweiten Profilstabs gelegene Längsnut des ersten Profilstabs und greift erst dann in den Zentralstab des zweiten Profilstabs ein. Da die Schenkel der von der Verbindungsschraube durchgriffenen Längsnut des ersten Profilstabs nachgiebig sind, ist die Befestigungsstabilität relativ gering. Dieser Effekt wird dadurch gefördert, daß der Eintrittsschlitz der hinterschnittenen Längsnut verhältnismäßig groß sein muß, damit der Kopf der Verbindungsschraube zur Anlage am Zentralstab des ersten Profilstabs hindurchgesteckt werden kann. Diese Größe bzw. Breite des Eintrittsschlitzes der Längsnut läßt eine gewisse Auffälligkeit der Verbindung der Profilstäbe nicht vermeiden.

Aus der US-A-3 901 612 ist eine Konstruktion aus Profilstäben bekannt, die mit einem längsdurchbohrten Zentralstab versehen sind und in ihren Außenflächen hinterschnittene Längsnuten aufweisen, die einander paarweise zu dem Zentralstab gegenüberliegen, wobei zwei Profilstäbe winkelig zusammengesetzt und von einer Verbindungsschraube zusammengehalten sind, die mit dem mit einem Gewinde versehenen Schraubenkopf in die Bohrung des Zentralstabs des zweiten Profilstabs eingeschraubt ist und an ihrem Fußende eine Halteplatte aufweist, die in eine der Stirnseite des zweiten Profilstabs benachbarte hinterschnittene Längsnut des ersten Profilstabs eingreift. Um den mit Gewinde versehenen Schraubenkopf in die Bohrung des Zentralstabs einschrauben zu können, ist der zweite Profilstab mit einer von einer Außenfläche ausgehenden Ausnehmung versehen, die bis in den Zentralstab hineinreicht und so groß bemessen ist, daß ein Winkelschlüssel in eine Mehrkantausnehmung des Schraubenkopfes eingesetzt und um einen vorbestimmten Winkel verdreht werden kann. Diese für den Zusammenbau der Konstruktion erforderliche Ausnehmung schwächt den zweiten Profilstab bzw. den Verbindungsbereich beider Profilstäbe erheblich und führt zu einem auffälligen Aussehen des Verbindungsbereichs der Profilstäbe.

Der Erfindung liegt daher die Aufgabe zugrunde, eine Konstruktion der eingangs genannten Art so zu verbessern, daß die Verbindung der Profilstäbe unauffällig und zugleich doch zur Aufnahme größerer Kräfte geeignet ist.

Diese Aufgabe wird dadurch gelöst, daß der Schraubenkopf der Verbindungsschraube in der dem zweiten Profilstab benachbarten Hinterschneidung des ersten Profilstabs angeordnet ist, der mindestens eine quer durch seinen Zentralstab verlaufende Schraubenverstellbohrung aufweist.

Für die Erfindung ist von Bedeutung, daß der Schraubenkopf der Verbindungsschraube in der dem zweiten Profilstab benachbarten Hinterschneidung des ersten Profilstabs angeordnet ist. Dementsprechend ist ein besonderes Verbindungsstück nicht mehr notwendig und die damit verbundenen Nachteile entfallen. Die des weiteren quer durch den Zentralstab verlaufende Schraubenverstellbohrung mündet aufgrund ihrer Relativlage zur Verbindungsschraube in der Hinterschneidung und ist damit durch die ohnehin vorhandene Längsnut zugänglich. Infolgedessen kann die Verbindungsschraube mit herkömmlichen Werkzeugen leicht betätigt werden und der Verbindungsbereich der Profilstäbe ist unauffällig bzw. kann abgedeckt werden. Die Schraubenverstellbohrungen können fabrikmäßig in der Nähe der Enden der Profilstäbe angebracht werden, oder auch vor Ort, was mit geeigneten Bohrschablonen leicht möglich ist. Es sind keine Spezialschrauben erforderlich.

Bei einer Konstruktion mit rechteckigen Profilstäben ist der Profilstab aus mindestens zwei Zentralstäben gebildet und seine Kantenlängen stehen im Verhältnis 1:2 oder einem ganzzahligen Vielfachen und/oder es sind mehrere, dem Mittenabstand zweier Zentralstäbe entsprechend entfernt voneinander angeordnete Schraubenverstellbohrungen vorhanden. Derartige Profilstäbe haben einen wesentlich größeren Querschnitt und sind infolgedessen wesentlich stabiler. Sie erlauben andererseits, mit einem Mindestmaß an unterschiedlich ausgebildeten Profilen auszukommen, da quadratische Profilstäbe mit einer Kantenlänge, die gleich einer Rechteckkantenlänge ist, an die gleich langen oder unter Inkaufnahme eines dann aber jedenfalls symmetrischen Kantenunterschiedes an die längeren Seitenflächen der rechteckigen Profilstäbe angeschlossen werden können, wodurch gegebenenfalls der nachträgliche Anschluß eines weiteren quadratischen Profilstabs an der Breitseite eines rechteckigen Profilstabs möglich ist.

Es versteht sich, daß bei rechteckigen Profilstäben mehrere Schraubenverstellbohrungen von der Stirnseite des zugehörigen Profilstabs gesehen hintereinander angeordnet sind, wenn z.B. ein rechteckiger Profilstab an einem vertikalen rechteckigen Profilstab hochkant befestigt werden soll.

Bei einer Konstruktion mit rechtwinkelig aneinanderstoßenden Profilstäben ist die Schraubenverstellbohrung oder mehrere Schraubenverstellbohrungen in einer Vertikalebene ihres Zentralstabs angeordnet. Dies dürfte die am häufigsten verwendete Profilstabverbindung sein, bei der es sich erübrigt, die Schraubenverstellbohrungen entsprechend dem jeweiligen Winkel auszurichten, den die Profilstäbe miteinander einschließen. Vielmehr genügt eine rechtwinkelige Anordnung auch der Schraubenverstellbohrungen.

Vorteilhafterweise ist die den Schraubenkopf aufnehmende Hinterschneidung des Profilstabs trapezförmig. Dadurch ist die Hinterschneidung den üblichen Halbrundköpfen von Verbindungsschrauben am besten angepaßt.

Die Außenflächen der Profilstäbe sind zu den Längsnuten hin dem Zentralstab schwach zugeneigt ausgebildet. Infolgedessen liegen die Seiten- bzw. Stirnflächen aneinanderstoßender Profilstäbe nicht großflächig aneinander, sondern stoßen im wesentlichen nur mit ihren Kantenbereichen zusammen. Dadurch wird die Wackelfreiheit der Verbindung gefördert, die oft dadurch gegeben ist, daß die Stirnfläche eines Profilstabs oder seine Seitenfläche z.B. durch Toleranzen konvex ausgebildet ist.

In Weiterbildung der Erfindung ist der Schraubenkopf der Verbindungsschraube mit einem Vorlageplättchen auf der Innenfläche der die Längsnut bildenden Profilwand abgestützt. Das Vorlagplättchen ermöglicht die Abtragung der Kräfte des Schraubenkopfes auf die Innenfläche der die Längsnut bildenden Profilwand ohne Einschneidung bzw. ohne Nachaußendrücken der Profilwand. Ein Einschneiden der im Falle ihres Bestehens aus Leichtmetall mit vergleichsweise geringen Kräften verformbaren Profilwand wäre der Verbindungsfestigkeit abträglich, wie auch eine Verformung der Profilwand.

Das Vorlageplättchen hat mindestens einen schraubenparallelen Vorsprung, der quer durch die Längsnut des den Schraubenkopf aufnehmenden Profilstabs als Verdrehsicherung in den anderen Profilstab eingreift. Das Vorlageplättchen hat in dieser Ausgestaltung zugleich auch noch die Wirkung, ein gegenseitiges Verdrehen der Profilstäbe zu verhindern, was bei dem Zentraleingriff der Verbindungsschraube in den Profilstab sonst nicht auszuschließen wäre. Eine vorteilhafte Ausbildung des Vorlageplättchens besteht darin, daß das Vorlageplättchen ein rechteckiges Blechstanzteil mit zwei schraubenparallelen Lappen ist, die längsnutbreit ausgebildet und zwischen den einander benachbarten Kanten einer die Längsnut bildenden Profilwand angeordnet sind. Durch die Lappen wird der gegen Verdrehung zu sichernde Profilstab in größtmöglicher Entfernung von der Verbindungsschraube und damit am wirkungsvollsten gehalten. Das Vorlageplättchen ist etwa hinterschneidungsbreit und seine neben den Lappen gelegenen Kantenabschnitte sind entsprechend der Länge von Steckvorsprüngen einer Abdeckkappe der Profilstirnseite von letzterer entfernt angeordnet. Das Vorlageplättchen ist also trotz seiner hinterschneidungsbreiten Ausbildung und seiner in die außenflächennah angeordneten Längsnuten eingreifenden Lappen so ausgebildet, daß eine Abdeckkappe einer Profilstirnseite mit ihren Steckvorsprüngen in die Hinterschneidungen des Profilstabs behinderungsfrei eingesteckt werden kann.

In Weiterbildung der Erfindung ist mindestens ein in eine Hinterschneidung quer einsetzbares, mit einer Gewindebohrung versehenes Lagerstück vorhanden, das Klemmittel aufweist. In eine Hinterschneidung quer einsetzbare Lagerstücke sind an sich bekannt. Sie haben den Vorteil, auch noch dann verwendet werden zu können, wenn eine Einführung in eine Hinterschneidung von der Stirnseite her nicht mehr möglich ist. Sie sind im Profilstab bzw. in dessen Hinterschneidung frei beweglich. Infolgedessen müssen sie immer im Zusammenwirken mit dem an ihm zu befestigenden Teil in der Hinterschneidung festgelegt werden. Eine Vorjustierung oder eine Beibehaltung der Justierung nach dem Lösen der Eckverbindung der Profilstäbe ist nicht möglich. Letzteres ist jedoch wünschenswert, z.B. wenn ein Profilstab und die an ihm über Lagerstücke angebrachten Teile nach einer Demontage wieder zusammengebaut werden sollen, ohne erneut justiert werden zu müssen. Infolgedessen ist die Verbindung zweier Profilstäbe bei Verwendung eines erfindungsgemäß Klemmittel aufweisenden Lagerstücks vorteilhafter einsetzbar. Das Lagerstück hat vorteilhafterweise einen in Bohrungsrichtung parallelogrammförmigen Umriß, wobei zwei Parallelogrammseiten längsnutenbreit und die anderen Parallelogrammseiten etwa hinterschneidungsbreit voneinander entfernt sind, und das Lagerstück hat einen in Bohrungsrichtung vorstehenden Klemmvorsprung, der mit Klemmflächen zwischen einander benachbarte Kanten einer die Längsnut bildenden Profilwand in Klemmsitz zu bringen ist. Das Lagerstück kann aber auch ein prismatischer Körper sein, der durch Teildrehung um seine Längsachse quer in die Hinterschneidung einzusetzen ist und als Klemmittel eine Federraste aufweist.

In Verbindung mit derartigen Klemmittel aufweisenden Lagerstücken ist vorteilhafterweise ein prismatischer Befestigungskörper mit mindestens einer Gewindebohrung und/oder mit mindestens einer Schraubendurchsteckbohrung für in eine Gewindebohrung eines Lagerstücks oder für eine direkt in einen anzuschraubenden Gegenstand einschraubbare Befestigungsschraube vorhanden. Der prismatische Befestigungskörper wird also seinerseits an dem Lagerstück verschraubt, indem Befestigungsschrauben durch eine Schraubendurchsteckbohrung gesteckt und angezogen werden, und/oder er dient selbst als Widerlager einer Befestigungsschraube z.B. für eine Arbeitsplatte.

Vorteilhafterweise ist eine längsnutbreite U-förmige Einsatzleiste vorhanden, die an ihren U-Schenkeln jeweils einen Steg aufweist, der bei beiden, durch Wenden der Leiste um 180° erreichbaren Einbaulagen die Hinterschneidung klemmend eingreift. Eine derartige Einsatzleiste ist also sowohl zur Abdeckung der Längsnut mit der Außenfläche ihres U-Bodens geeignet, als auch als die Breite der Längsnut reduzierende Einpaßleiste für Platten o.dgl.

Die Erfindung wird anhand von in der Zeichnung dargestellten Ausführungsbeispielen erläutert. Es zeigt:

Fig. 1 eine Zusammenbauzeichnung einer aus drei Profilstäben bestehenden Eckkonstruktion,

Fig. 2a, b Ansichten eines in eine Hinterschneidung quer einsetzbaren ersten Lagerstücks,

Fig. 3a, b eine Seitenansicht und eine Längsschnittdarstellung eines zweiten in eine Hinterschneidung quer einsetzbaren Lagerstücks,

Fig. 4 eine Seitenansicht einer Einsatzleiste,

Fig. 5 eine Aufsicht eines prismatischen Befestigungskörpers,

Fig. 6 eine Stirnansicht eines quadratischen Profilstabs mit Befestigungsschraube und

Fig. 7 eine Seitenansicht des Profilstabs der Fig. 6.

Die Profilstäbe 10, 11 sollen mit weiteren nicht dargestellten Profilstäben einen rechteckigen Rahmen bilden. Die Ecken des Rahmens werden von Profilstäben 12 unterstützt. Auf dem Rahmen wird eine Arbeitsplatte 13 befestigt und zwischen mehreren als Beinen wirkenden Profilstäben 12 kann ein Zwischenboden 14 angeordnet werden. Die Eckausbildung erfolgt derart, daß die Stirnseite 15 an der rahmeninnenseitigen Wand des Profilstabs 11 nahe der Stirnseite 16 befestigt wird, während der Profilstab 12 an der unteren Außenwand des Profilstabs 11 befestigt wird.

Die Profilstäbe 10, 11 haben denselben quadratischen Querschnitt, während der Profilstab 12 einen rechteckigen Querschnitt hat, dessen Schmalseite der Kantenlänge der Profilstäbe 10, 11 entspricht und dessen Breitseite doppelt so groß ist, wie seine Schmalseite bzw. die Kantenlänge der Profilstäbe 10, 11. Das Längenverhältnis zwischen Schmalseite und Breitseite beträgt 1:2.

Im zusammengebauten Zustand liegt lediglich die Stirnseite 16 des Profilstabs 11 offen und wird daher mit einer Abdeckkappe 18 verdeckt.

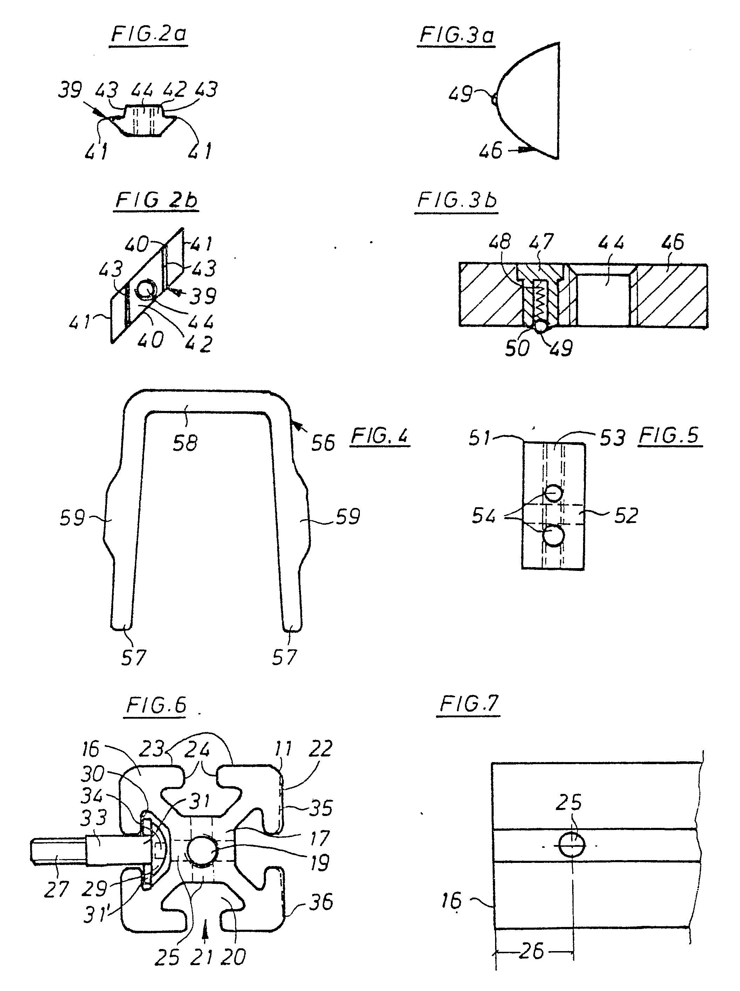

Jeder Profilstab 10, 11 hat gemäß Fig. 6 einen etwa rechteckigen Zentralstab 17 mit einer durchlaufenden Bohrung 19, die von der Stirnseite 16 aus über eine bestimmte Länge mit einem Gewinde versehen ist. Von den Ecken des Zentralstabs 17 stehen pfeilartige Vorsprünge 22 vor, die zwischen sich jeweils eine Hinterschneidung 20 und eine Längsnut 21 einschließen. Die Hinterschneidung 20 ist etwa trapezförmig. Zwei Vorsprünge 22 bilden eine Profilwand 23, welche die Längsnut 21 begrenzende Kanten 24 aufweist.

Der Zentralstab 17 ist gemäß Fig. 7 parallel zur Stirnseite 16 durchbohrt. Die betreffende Schraubenverstellbohrung 25 hat einen Abstand 26 von der Stirnseite 16, der der halben Länge der Profilwand 23 entspricht. Infolgedessen kann beispielsweise der Profilstab 10 derart am Profilstab 11 befestigt werden, daß seine Außenfläche 28 mit der Stirnseite 16 des Profilstabs 11 fluchtet. Fig. 6 zeigt, daß zwei Schraubenverstellbohrungen kreuzweise angeordnet sind, damit der Profilstab 11 nicht in seiner Zusammenbaulage beschränkt ist.

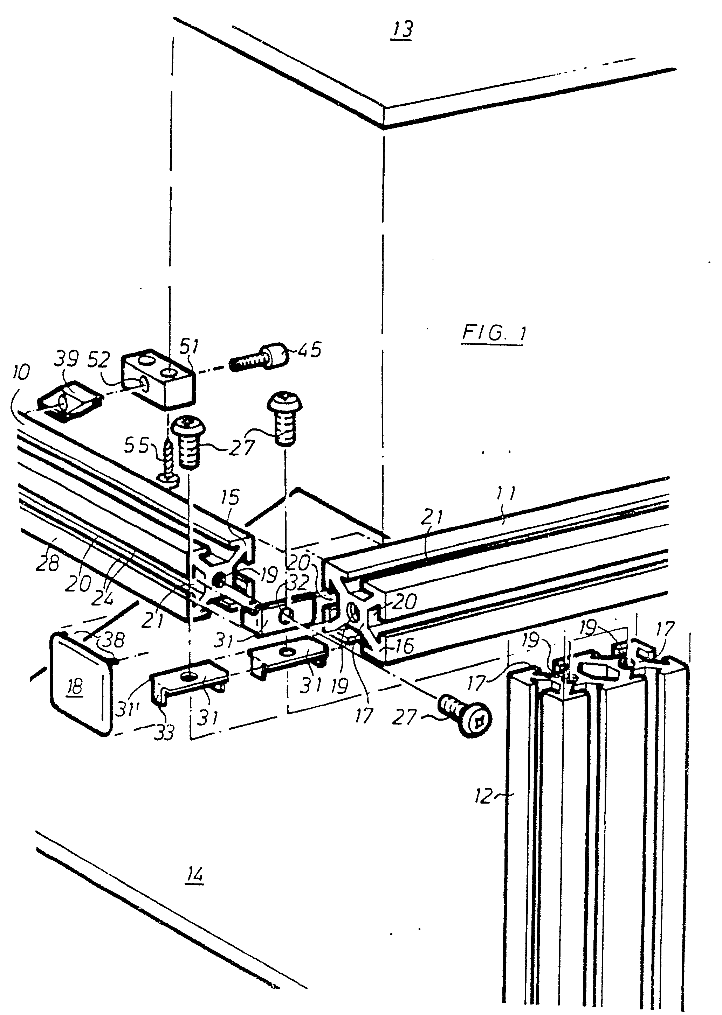

Die Befestigung zweier Profilstäbe 10, 11 aneinander erfolgt mit Verbindungsschrauben 27, deren Kopf 29 gemäß Fig. 6 in einer Hinterschneidung 20 des Profilstabs 11 zu liegen kommt. Das Gewinde der Verbindungsschraube 27 wird in das Gewinde der Längsbohrung 19 des Profilstabs 10 eingedreht. Der Schraubenkopf 29 liegt aber nicht direkt auf der Innenfläche 30 der gemäß Fig. 6 vertikalen linken Profilwand auf, sondern auf einem Vorlageplättchen 31, das gemäß Fig. 1 rechteckig ausgebildet ist und eine dem Schraubenschaft der Verbindungsschraube 27 entsprechende Durchtrittsbohrung 32 aufweist. An den Schmalseiten des rechteckigen Vorlageplättchens 31 stehen schraubenparallele Lappen 33 vor, die die Längsnut 21 der Profilwand durchsetzen. Sie stehen über deren Außenfläche vor und greifen parallel in die Längsnuten 20 des anzuschließenden Profilstabs 10. Da das Vorlageplättchen 31 etwa hinterschneidungsbreit ist, würde jede Verdrehung des Profilstabs 11 zur Beaufschlagung des Plättchens 31 führen, so daß sich die Lappen 33 an den Kanten 24 der Längsnuten 20 abstützen und eine Relativverdrehung der Profilstäbe 10, 11 verhindern würden.

Die Verbindung der Profilstäbe 10, 11 wird hergestellt, indem die Schraube 27 und das Verbindungsplättchen 31 zusammengesteckt und gemeinsam in die aus Fig. 1 ersichtliche Hinterschneidung 20 eingeführt werden. Dabei durchgreifen die Lappen 33 des Vorlageplättchens 31 die der Hinterschneidung benachbarte Längsnut 20. Der Profilstab 10 wird aufgesteckt und die Verbindungsschraube 27 in die Bohrung 19 eingedreht, indem z.B. ein Sechskantschlüssel durch die Schraubenverstellbohrung 25 des Profilstabs 11 in eine Innensechskantausnehmung 34 des Schraubenkopfs 29 der Verbindungsschraube 27 gesteckt und verdreht wird.

Die Außenflächen 35 der Profilwände 23 sind zu den Längsnuten 21 hin dem Zentralstab 17 schwach zugeneigt ausgebildet, wie das gestrichelt dargestellt wurde. Infolgedessen sitzt die Stirnfläche 15 des Profilstabs 10 nur auf den profilkantenseitig gelegenen Bereichen 36 der Profilwände 23 auf und kann infolgedessen wackelfrei befestigt werden.

Die Verbindung des Profilstabs 12 mit dem Profilstab 11 erfolgt in ähnlicher Weise, indem die Verbindungsschrauben 27 durch Vorlageplättchen 31 gesteckt und mit ihren Köpfen in die in der zeichnerischen Darstellung untenliegende Hinterschneidung des Profilstabs 11 eingeführt werden. Die Verbindung erfolgt dann durch Einschrauben der Verbindungsschrauben 27 in die Längsbohrungen 19 des Profilstabs 12.

Nach der Verbindung der drei Profilstäbe 10, 11, 12 miteinander ist lediglich die Stirnseite 16 unabgedeckt und wird durch Aufstecken der Abdeckkappe 18 verkleidet. Die Abdeckkappe 18 ist flach ausgebildet und besitzt Steckvorsprünge 38, die in die spitzwinkeligen Eckbereiche der trapezförmigen Hinterschneidungen 20 eingesetzt werden und sich dort verklemmen. Dabei stören die Vorlageplättchen 31 nicht, da sie gemäß Fig. 1 gegenüber ihren Lappen 33 zurückversetzte Kantenabschnitte 31' haben, die von den Schmalkanten der rechteckförmigen Vorlageplättchen 31 gebildet werden und das Einstecken der Steckvorsprünge 38 gestatten.

In Fig. 1 ist ein Lagerstück 39 dargestellt, dessen genaue Ausbildung aus den Fig. 2a, 2b ersichtlich ist. Die langen Parallelogrammseiten 40 sind längsnutbreit voneinander entfernt, d.h. sie passen zwischen die die Längsnut 21 begrenzenden Kanten 24 der Profilwand 23 bei Parallellage der betreffenden Kanten hindurch. Die schmalen Parallelogrammseiten 41 sind etwa hinterschneidungsbreit voneinander entfernt, so daß das Lagerstück 39 nach seinem Einführen in eine Hinterschneidung 20 und nach Verdrehung in eine Lage, bei der die schmalen Parallelogrammseiten parallel zu der Hinterschneidung 20 verlaufen, ein Klemmvorsprung 42 mit seinen beidseitig gelegenen Klemmflächen 43 parallel zu den Kanten 24 der benachbarten Profilwand 23 liegt. Die Klemmflächen 43 sind gemäß Fig. 2a konisch verjüngt ausgebildet, so daß sie mit den betreffenden Kanten 24 in Klemmsitz kommen, wenn das Lagerstück 39 in dieser Lage mit dem Klemmvorsprung 42 in die betreffende Längsnut 21 hineingezogen wird. Das erfolgt beispielsweise, indem eine Befestigungsschraube 45 in eine Gewindebohrung 44 des Lagerstücks 39 eingeschraubt und zugbeaufschlagt wird. Mit derartigen Lagerstücken 39 kann eine Vorjustierung vorgenommen werden, bei der beispielsweise mehrere Klemmstücke 39 in wohl definiertem Abstand voneinander angeordnet werden, so daß eine Befestigung von weiteren Teilen entsprechend lagegenau und ohne Justieraufwand nachträglich paßgenau vorgenommen werden kann.

Die Fig. 3a, 3b zeigen ein Lagerstück 46, das mit einer Federraste 47 bis 50 als Klemmmittel ausgebildet ist. Das Lagerstück 46 ist ein prismatischer Körper, dessen Länge im wesentlichen durch die erforderliche Gewindebohrung 44, die Abmessungen der Federraste 47 bis 50 und die Anforderungen an die Haltekraft bestimmt werden, die von dem Lagerstück 46 auf einen Profilstab übertragen werden muß. Die Federraste 47 bis 50 besteht im wesentlichen aus einer Einsatzbuchse 47, in deren Bohrung eine Feder 48 eingesetzt ist, die eine Kugel 49 gegen eine Büchsenkante 50 drückt. Beim Einsetzen des Lagerstücks 46 in eine Hinterschneidung 20 wird die Kugel 49 entgegen der Wirkung der Kraft der Feder 48 in das Innere der Federraste 47 bis 50 gedrückt und klemmt das Lagerstück 46 fest. Eine Verstellung des Lagerstücks 46 in einer Hinterschneidung 20 ist hier besonders einfach möglich.

Die beschriebenen Lagerstücke 39, 46 können verwendet werden, um damit beispielsweise Befestigungskörper 51 anzuschrauben. Fig. 1 zeigt die schematische Anordnung eines solchen Befestigungskörpers 51 und seine Befestigung mit der Befestigungsschraube 45, die durch eine Schraubendurchsteckbohrung 52 gesteckt und in das Gewinde 44 des Lagerstücks 39 eingeschraubt wird. Der prismatische Befestigungskörper 51 hat eine in derselben Ebene quer dazu angeordnete Gewindebohrung 53, sowie weitere senkrecht dazu angeordnete Schraubendurchsteckbohrungen 54 von unterschiedlichem Durchmesser, durch die Befestigungsschrauben 55 gesteckt werden können, um z.B. die Arbeitsplatte 13 in der aus Fig. 1 ersichtlichen Weise zu befestigen.

Eine in Fig. 4 dargestellte Einsatzleiste 56 ist U-förmig ausgebildet. Sie besteht beispielsweise aus Kunststoff, so daß ihre U-Schenkel 57 gegeneinander gebogen werden können. Infolgedessen kann die Einsatzleiste 56 beispielsweise mit ihrem U-Boden 58 voran durch eine Längsnut 21 in eine Hinterschneidung 20 gesteckt werden. Dabei greifen an den Außenflächen der U-Schenkel 57 vorhandene Stege 59 hinter Kanten 24 der Profilwände 23, so daß die Einsatzleiste 56 fest sitzt und eine Aufnahme für Einsteckplatten bildet. Wird die Einsatzleiste 56 hingegen mit den freien Enden ihren U-Schenkeln 57 voran durch eine Längsnut 21 in eine Hinterschneidung 20 gesteckt, so schließt der U-Boden 58 bündig mit der Außenfläche 35 einer Wand 23 ab, so daß eine paßgerechte Abdeckung der Hinterschneidung 20 entsteht, weil die Stege 59 auch bei dieser Einbaulage die Kanten 24 des Profilstabs hintergreifen.

**Patentansprüche**

1. Konstruktion aus Profilstäben (10, 11, 12), insbesondere Leichtmetallstäben, die mit einem längs durchbohrten Zentralstab (17) versehen sind und in ihren Außenflächen (23) hinterschnittene Längsnuten (21) aufweisen, von denen zwei einander paarweise zu dem Zentralstab (17) gegenüberliegen, wobei zwei Profilstäbe (10, 11) winkelig zusammengesetzt und von einer Verbindungsschraube (27) zusammengehalten sind, die mit dem ein Anziehen dieser Schraube (27) ermöglichenden Schraubenkopf (29) in der Hinterschneidung einer Längsnut eines diesen beaufschlagenden Profilstabs (11) angeordnet und mit dem Schraubengewinde von der Stirnseite des zweiten Profilstabs (10) in dessen mit Innengewinde versehenen Zentralstab (17) eingeschraubt ist, dadurch gekennzeichnet, daß der Schraubenkopf (29) der Verbindungsschraube (27) in der dem zweiten Profilstab (10) benachbarten Hinterschneidung (21) des ersten Profilstabs (11) angeordnet ist, der mindestens eine quer durch seinen Zentralstab (17) verlaufende Schraubenverstellbohrung (25) aufweist.

2. Konstruktion nach Anspruch 1, mit rechtwinkeligen Profilstäben, dadurch gekennzeichnet, daß der Profilstab (12) aus mindestens zwei Zentralstäben (17) gebildet ist und seine Kantenlängen im Verhältnis 1:2 oder einem ganzzahligen Vielfachen stehen und/oder mehrere, dem Mittenabstand zweier Zentralstäbe (17) entsprechend entfernt voneinander angeordnete Schraubenverstellbohrungen (25) vorhanden sind.

3. Konstruktion nach Anspruch 1 oder 2, mit rechtwinkelig aneinanderstoßenden Profilstäben, dadurch gekennzeichnet, daß die Schraubenverstellbohrung (25) oder mehrere Schraubenverstellbohrungen in einer Vertikalebene ihres Zentralstabs (17) angeordnet sind.

4. Konstruktion nach einem der Ansprüche 1 bis 3, dadurch gekennzeichnet, daß die Außenflächen (35) der Profilstäbe (10, 11, 12) zu den Längsnuten (21) hin dem Zentralstab (17) schwach zugeneigt ausgebildet sind.

5. Konstruktion nach einem der Ansprüche 1 bis 4, dadurch gekennzeichnet, daß der Schraubenkopf (29) der Verbindungsschraube (27) mit einem Vorlageplättchen (31) auf der Innenfläche (30) der die Längsnut (21) bildenden Profilwand (23) abgestützt ist.

6. Konstruktion nach Anspruch 5, dadurch gekennzeichnet, daß das Vorlageplättchen (31) mindestens einen schraubenparallelen Vorsprung hat, der quer durch die Längsnut (21) des den Schraubenkopf (29) aufnehmenden Profilstabs (11) als Verdrehsicherung in den anderen Profilstab (10) eingreift.

7. Konstruktion nach Anspruch 6, dadurch gekennzeichnet, daß das Vorlageplättchen (31) ein rechteckiges Blechstanzteil mit zwei schraubenparallelen Lappen (33) ist, die längsnutbreit ausgebildet und zwischen den einander benachbarten Kanten (24) einer die Längsnut (21) bildenden Profilwand (23) angeordnet sind.

8. Konstruktion nach Anspruch 7, dadurch gekennzeichnet, daß das Vorlageplättchen (31) etwa hinterschneidungsbreit ist und seine neben den Lappen (33) gelegenen Kantenabschnitte (31′) entsprechend der Länge von Steckvorsprüngen (38) einer Abdeckkappe (18) der Profilstirnseite (16) von letzterer entfernt angeordnet sind.

9. Konstruktion nach einem der Ansprüche 1 bis 8, dadurch gekennzeichnet, daß mindestens ein in eine Hinterschneidung (29) quer einsetzbares, mit einer Gewindebohrung (44) versehenes Lagerstück (39, 46) vorhanden ist, das Klemmittel aufweist.

10. Konstruktion nach Anspruch 9, dadurch gekennzeichnet, daß das Lagerstück (39) in Bohrungsrichtung einen parallelogrammförmigen Umriß hat, wobei zwei Parallelogrammseiten (40) längsnutbreit und die anderen Parallelogrammseiten (41) etwa hinterschneidungsbreit voneinander entfernt sind und daß das Lagerstück (39) einen in Bohrungsrichtung vorstehenden Klemmvorsprung (42) hat, der mit Klemmflächen (43) zwischen einander benachbarte Kanten (24) einer die Längsnut (21) bildenden Profilwand (23) in Klemmsitz zu bringen ist, oder daß das Lagerstück (46) ein prismatischer Körper ist, der durch Teildrehung um seine Längsachse quer in die Hinterschneidung (20) einzusetzen ist und als Klemmittel eine Federraste (47 bis 50) aufweist.

11. Konstruktion nach einem der Ansprüche 1 bis 10, dadurch gekennzeichnet, daß ein prismatischer Befestigungskörper (51) mit mindestens einer Gewindebohrung (53) und/oder mit mindestens einer Schraubendurchsteckbohrung (52, 54) für in eine Gewindebohrung (44) eines Lagerstücks (39, 46) oder für eine direkt in einen anzuschraubenden Gegenstand einschraubbare Befestigungsschraube (45, 55) vorhanden ist.

12. Konstruktion nach einem der Ansprüche 1 bis 11, dadurch gekennzeichnet, daß eine längsnutbreite U-förmige Einsatzleiste (56) vorhanden ist, die an ihren U-Schenkeln (57) jeweils einen Steg (59) aufweist, der bei beiden, durch Wenden der Leiste um 180° erreichbaren Einbaulagen in die Hinterschneidung (20) klemmend eingreift.

## Claims

1. Sectional frame (10, 11, 12) particularly of light metal sections, which are provided with a longitudinally bored central core (17) and has longitudinal grooves (21) undercut in its outer surfaces (23), two of which form a mutually opposed pair relative to the central core (17), wherein two profile sections (10, 11) are assembled at an angle and are held together by a connecting screw (27) which is arranged its screw head (29) enabling drawing together with this screw (27) disposed in the undercut of a longitudinal groove of one of the assembled profile sections (11) and is screwed with the screw thread from the end of the second profile section (10) into its central core (17) provided with an internal screw thread, characterised in that the screw head (29) of the connecting screw (27) is arranged in the undercut (21) of the first profile section (11) adjacent the second profile section (10), which has at least one screw adjusting bore (25) running transversely through its central core (17).

2. Frame according to claim 1, with rectangular profile sections, characterised in that the profile section (12) is formed of at least two central cores (17) and the length of its sides are in the ratio 1:2 or an integral multiple and/or more, mutually spaced screw adjustment bores (25) being present corresponding to the distance between two central cores (17).

3. Frame according to claim 1 or 2, with rectangular abutting profile sections, characterised in that the screw adjusting bore (25) or several screw adjusting bores are arranged in a vertical plane of its central core (17).

4. Frame according to any of claims 1 to 3, characterised in that the outer surfaces (35) of the profile sections (10, 11, 12) are formed slightly inclined to the longitudinal groove (21) in the central core (17).

5. Frame according to any of claims 1 to 4, characterised in that the screw head (29) of the connecting screw (27) is supported with a washer (31) on the inner surface (30) of the profile wall (23) forming the longitudinal groove (21).

6. Frame according to claim 5, characterised in that the washer (31) has at least one projection parallel to the screw, which engages the profile section (11) receiving the screw head (29) transversely through the longitudinal groove (21) as a rotational security member in the other profile section (10).

7. Frame according to claim 6, characterised in that the washer (31) is a rectangular sheet metal stamped component with two lugs (33) parallel to the screw, which are made in the width of the longitudinal groove and are arranged between the mutually adjacent edges (24) of a profile wall (23) forming the longitudinal groove (21).

8. Frame according to claim 7, characterised in that the washer (31) is approximately the width of the undercut and its peripheral sections (31') disposed adjacent the lugs (33) are arranged corresponding to the length of projections (38) of a cap member (18) on the section face (16) remote from the latter.

9. Frame according to any of claims 1 to 8, characterised in that at least one support member (39, 46) insertable transversely into an undercut (29) is provided with a threaded bore (44), which receives a clamping member.

10. Frame according to claim 9, characterised in that the support member (39) has in the direction of the bore a parallelogram formed periphery, whereby two sides (40) of the parallelogram are the width of the longitudinal groove and other sides (41) of the parallelogram are spaced from one another approximately by the width of the undercut and in that the support member (39) has a clamping projection (42) disposed in the direction of the bore which is disposed with clamping surfaces (43) between the mutually adjacent edges (24) of a profile wall (23) in the clamping location forming the longitudinal groove (21) or in that the support member (46) is a prismatic body which is inserted transversely into the undercut (20) by partial rotation about its longitudinal axis and has a spring ball catch (47 to 50) as a clamping member.

11. Frame according to any of claims 1 to 10, characterised in that a prismatic securement member (51) with at least one threaded bore (53) and/or with at least one through bore (52, 54) for securing screws (45, 55) insertable into a threaded bore (44) of a support member (39, 46) or for a securement member directly screwable into an article to be screwed into place.

12. Frame according to any of claims 1 to 11, characterised in that a U-shaped insert member (56) as wide as the longitudinal groove is provided, which has a web (59) on its of its U limbs (56) which is clampingly engaged in both locations in the undercut (20) attainable by turning the member through 180°.

## Revendications

1. Ossature en barres profilées (10, 11, 12), notamment en barres de métal léger, qui sont pourvues d'une barre centrale (17) percée longitudinalement et qui présentent, dans leurs surfaces extérieures (23), des rainures longitudinales (21) échancrées intérieurement, dont deux sont disposées par paires dans des positions opposées par rapport à la barre centrale (17), ossature dans laquelle deux barres profilées (10, 11) sont assemblées suivant un angle et sont maintenues ensemble par une vis d'assemblage (27) qui est disposée avec la tête de vis (29) permettant un serrage de cette vis (27) dans l'échancrure d'une rainure longitudinale d'une barre profilée (11) la sollicitant et qui est vissée, par son filetage, de la face frontale de la deuxième barre profilée (10) dans la barre centrale (17) de celle-ci pourvue d'un taraudage, caractérisée en ce que la tête de vis (29) de la vis d'assemblage (27) est disposée dans l'échancrure (21), voisine de la deuxième barre profilée, de la première barre profilée (11), qui présente au moins un perçage d'ajustement de vis (25) s'étendant transversalement à travers sa barre centrale (17).

2. Ossature selon la revendication 1, avec des barres profilées formant un angle droit, caractérisée en ce que la barre profilée (12) est constituée par au moins deux barres centrales (27) et les longueurs de ses arêtes se situent dans le rapport 1:2 ou un multiple entier et/ou en ce qu'il existe plusieurs perçages d'ajustement de vis (25) séparés d'une distance correspondant à l'entraxe des deux barres centrales (17).

3. Ossature selon la revendication 1 ou 2, avec des barres profilées s'aboutant à angle droit, caractérisée en ce que le perçage d'ajustement de vis (25) ou plusieurs perçages d'ajustement de vis sont disposés dans un plan vertical de leur barre centrale (17).

4. Ossature selon l'une des revendications 1 à 3, caractérisée en ce que les surfaces extérieures (35) des barres profilées (10, 11, 12) sont réalisées légèrement inclinées vers les rainures longitudinales (21) en direction de la barre centrale (17).

5. Ossature selon l'une des revendications 1 à 4, caractérisée en ce que la tête de vis (29) de la vis d'assemblage (27) s'appuie par une plaquette intercalaire (31) sur la surface intérieure (30) de la paroi (23) du profilé définissant la rainure longitudinale (21).

6. Ossature selon la revendication 5, caractérisée en ce que la plaquette intercalaire (31) comporte au moins une saillie parallèle à la vis, qui s'engage transversalement, en passant à travers la rainure longitudinale (21) de la barre profilée (11) recevant la tête de vis (29), dans l'autre barre profilée (10), pour constituer une sécurité contre la tension.

7. Ossature selon la revendication 6, caractérisée en ce que la plaquette intercalaire (31) est une pièce rectangulaire découpée en tôle avec deux pattes (33) parallèles à la vis, qui sont réalisées à la largeur de la rainure longitudinale et qui sont disposées entre les bords mutuellement voisins (24) d'une paroi (23) du profilé définissant la rainure longitudinale.

8. Ossature selon la revendication 7, caractérisée en ce que la plaquette intercalaire (31) a approximativement la largeur d'une échancrure et les parties de ses bords (31'), situées à côté des pattes (33), sont éloignées d'un chapeau de recouvrement (18) de la face frontale (16) du profilé, d'une distance qui correspond à la longueur de saillies d'emboîtement (38) de ce dernier.

9. Ossature selon l'une des revendications 1 à 8, caractérisée en ce qu'il existe au moins une pièce d'appui (39, 46) pourvue d'un perçage fileté (44), qui peut être insérée transversalement dans une échancrure (29) et qui présente des moyens de blocage.

10. Ossature selon la revendication 9, caractérisée en ce que la pièce d'appui (39) a, dans la direction du perçage, un contour en forme de parallélogramme, deux côtés (40) du parallélogramme étant distants l'un de l'autre de la largeur de la rainure longitudinale et les deux autres côtés (41) du parallélogramme étant approximativement distants l'un de l'autre de la largeur de l'échancrure et en ce que la pièce d'appui (39) a une saillie de blocage (42) qui s'avance dans la direction du perçage et qui doit être amenée en appui bloquant, par des surfaces de serrage (43), entre des bords mutuellement voisins (24) d'une paroi (23) du profilé définissant la rainure longitudinale (21) ou en ce que la pièce d'appui (46) est un corps prismatique qu'il y a lieu d'insérer transversalement dans l'échancrure (20) par une rotation partielle autour de son axe longitudinal, et qui présente un cliquet élastique (47 à 50) comme moyen de blocage.

11. Ossature selon l'une des revendications 1 à 10, caractérisée en ce qu'il existe un corps de fixation prismatique (51) avec au moins un perçage fileté (51) et/ou avec au moins un perçage de passage de vis (52, 54) pour une vis de fixation (45, 55) apte à être vissée dans un perçage fileté (44) d'une pièce d'appui (39, 46) ou apte à être vissée directement dans un objet à assembler par vissage.

12. Ossature selon l'une des revendications 1 à 11, caractérisée en ce qu'il existe une barrette de montage en forme d'U (56) ayant la largeur d'une rainure longitudinale et, qui présente, sur chacune des branches (57) du U, une nervure (59) qui vient en prise dans l'échancrure (20) pour les deux positions de montage susceptibles d'être obtenues en retournant la barrette de 180°.

FIG. 1

FIG.2a

39 43 44 42 43

41 41

FIG 2b

40 41
43 43
39
41 44
40 42

58 56 FIG.4

59 59

57 57

FIG.6

16 23 24 11 22
30
34 31
33 35
17
19
27 29
31'
36

25 21 20

FIG.3a

49

46

FIG.3b

48 47 44 46

50 49

51 53 FIG.5

54 52

FIG.7

25

16

26